# EUROPEAN PATENT SPECIFICATION

(11) **EP 4 491 478 B1**
(45) Date of publication and mention of the grant of the patent: **22.07.2026**
(21) Application number: 23765899.2
(22) Date of filing: 03.03.2023
(51) Int. Cl.: B60W 30/188, B60W 10/08, B60W 10/06, B60W 20/10, B60W 30/20

(54) **ENGINE LOAD POINT ALLOCATION CONTROL METHOD AND APPARATUS, AND STORAGE MEDIUM AND VEHICLE**
VERFAHREN UND VORRICHTUNG ZUR STEUERUNG DER ZUWEISUNG VON MOTORLASTPUNKTEN SOWIE SPEICHERMEDIUM UND FAHRZEUG
PROCÉDÉ ET APPAREIL DE COMMANDE D'ALLOCATION DE POINT DE CHARGE DE MOTEUR, ET SUPPORT DE STOCKAGE ET VÉHICULE

(30) Priority: 10.03.2022 CN 202210240181
(43) Date of publication of application: 15.01.2025
(73) Proprietor: Great Wall Motor Company Limited, Baoding, Hebei 071000 (CN)
(72) Inventor: CAO, Zhimin, Baoding, Hebei 071000 (CN); WANG, Peng, Baoding, Hebei 071000 (CN)
(74) Representative: Klunker IP Patentanwälte PartG mbB
(86) International application number: PCT/CN2023/079528
(87) International publication number: WO 2023/169321

(56) References cited:
- WO-A1-2009/100788
- CN-A- 110 682 906
- CN-A- 115 230 709
- JP-A- 2008 162 397
- US-A1- 2008 122 391
- US-A1- 2015 321 659
- US-B2- 10 266 170
- US-B2- 8 417 431

## Description

### TECHNICAL FIELD

The present invention relate to the technical field of vehicles and more particularly, to a control method for engine load point allocation, a corresponding storage medium, a corresponding vehicle, and corresponding computer program product.

### BACKGROUND

For a power architecture of hard connection between an engine and an electric generator, when a vehicle is in a direct-drive operation mode of the engine, the engine directly drives the vehicle without driving the electric generator to charge a high-voltage battery, and therefore, the electric generator has no torque at this moment. When the engine operates and the electric generator has no torque, due to the existence of a gear gap between the engine and the electric generator, the electric generator will generate periodic gear knocking noise during idling, which lowers the user experience. Therefore, the poor user experience caused by the periodic gear knocking noise due to the electric generator idling in the direct-drive operation mode of the engine becomes an urgent problem to be solved.

US 2008/122391 A1 discloses a control apparatus for a vehicular drive apparatus including an engine and a motor, wherein the control apparatus includes a controller that determines the operating point of the engine and the operating point of the motor based on the characteristic of the vehicular drive apparatus. When at least one of the operating point of the motor and the operating point of the engine is in at least one of a motor noise occurrence region and a gear noise occurrence region, the controller changes the at least one of the operating point of the motor and the operating point of the engine so that the at least one of the operating point of the motor and the operating point of the engine avoids the at least one of the motor noise occurrence region and the gear noise occurrence region. This suppresses at least one of motor noise and gear noise.

### SUMMARY

It is an object of the present invention to provide a control method for engine load point allocation, a corresponding storage medium, a corresponding vehicle, and a corresponding computer program product, so as to solve the problem of poor user experience caused by periodic gear knocking noise due to an electric generator idling in a direct-drive operation mode of an engine.

The object is achieved by the features of the independent claim 1 regarding the method, of independent claim 7 regarding the readable storage medium, of independent claim 8 regarding the vehicle, and of independent claim 9 regarding the computer program product.

### Beneficial effects:

According to the control method for the engine load point allocation provided by the present invention, when the current operation condition of the vehicle meets the engine load point adjustment condition, the first load point torque, currently needing to be adjusted, of the engine is acquired; when the first load point torque is the regenerative torque, the proportionality coefficient is allocated to the electric generator according to the current operation parameters of the vehicle, and the first load point torque originally borne only by the driving motor is allocated to be jointly borne by the electric generator and the driving motor; and the allocation is performed on the second load point torque of the electric generator and the third load point torque of the driving motor according to the first load point torque and the proportionality coefficient, to ensure that the electric generator has a certain torque and does not idle, and periodic gear knocking noise of the electric generator during idling is avoided. At the same time, the second load point torque is greater than the preset load point torque, such that a Noise, Vibration and Harshness (hereinafter referred to as NVH) performance of the vehicle is guaranteed while it is ensured that the electric generator has a certain torque, the user experience is improved, and the problem of poor user experience caused by the periodic gear knocking noise due to the electric generator idling in the direct-drive operation mode of the engine is solved.

### BRIEF DESCRIPTION OF THE DRAWINGS

In order to describe the technical solutions of the present invention more clearly, the accompanying drawings required for describing the present invention will be briefly introduced below.
FIG. 1 is a flow chart of a control method for engine load point allocation;
FIG. 2 is a structural block diagram of a control apparatus for engine load point allocation;
FIG. 3 schematically shows a block diagram of a computing and processing device for performing the method; and
FIG. 4 schematically shows a storage unit for holding or carrying program codes for implementing the method.

### DETAILED DESCRIPTION

The technical solutions of the present invention will be described clearly and completely below in conjunction with the accompanying drawings.

Hybrid vehicles operate in various modes that are respectively a pure electric operation mode, a series operation mode, a parallel operation mode, a direct-drive operation mode of an engine, an energy recovery mode, etc. The pure electric operation mode refers to a mode that there is only a driving motor (a Torque Max (TM) motor) for driving a vehicle; the series operation mode refers to a mode that an engine drives an electric generator (a Governor Motor (GM)) to charge a high-voltage battery, and at the same time, a driving motor drives the vehicle; and the direct-drive operation mode of the engine refers to a mode that a clutch is closed, the engine directly drives the vehicle, at the same time, the engine does not need to drive the electric generator to charge the high-voltage battery, and the electric generator has no torque at this moment. In the parallel operation mode, the engine and the TM motor jointly drive the vehicle to operate, and the GM motor also takes part in a vehicle driving process under a special condition. In the pure electric operation mode, the engine is not started, and therefore, there is no gear knocking noise. In the series operation mode, the electric generator generates a greater torque, but generates no gear knocking noise during electric generation. In the direct-drive operation mode of the engine, the engine operates, and the electric generator has no torque; and due to the existence of a gear gap between the engine and the electric generator, the electric generator will generate periodic gear knocking noise during idling, which lowers the user experience.

To this end, according to a control method for engine load point allocation provided by the present invention, when the current operation condition of the vehicle meets an engine load point adjustment condition, a first load point torque, currently needing to be adjusted, of the engine is acquired; when the first load point torque is a regenerative torque, a proportionality coefficient is allocated to the electric generator according to current operation parameters of the vehicle, and the first load point torque originally borne only by the driving motor is allocated to be jointly borne by the electric generator and the driving motor; and allocation is performed on a second load point torque of the electric generator and a third load point torque of the driving motor according to the first load point torque and the proportionality coefficient, to ensure that the electric generator has a certain torque and does not idle, and periodic gear knocking noise of the electric generator during idling is avoided. At the same time, the second load point torque is greater than a preset load point torque, such that an NVH performance of the vehicle is guaranteed while it is ensured that the electric generator has a certain torque, the user experience is improved, and the problem of poor user experience caused by the periodic gear knocking noise due to the electric generator idling in the direct-drive operation mode of the engine is solved.

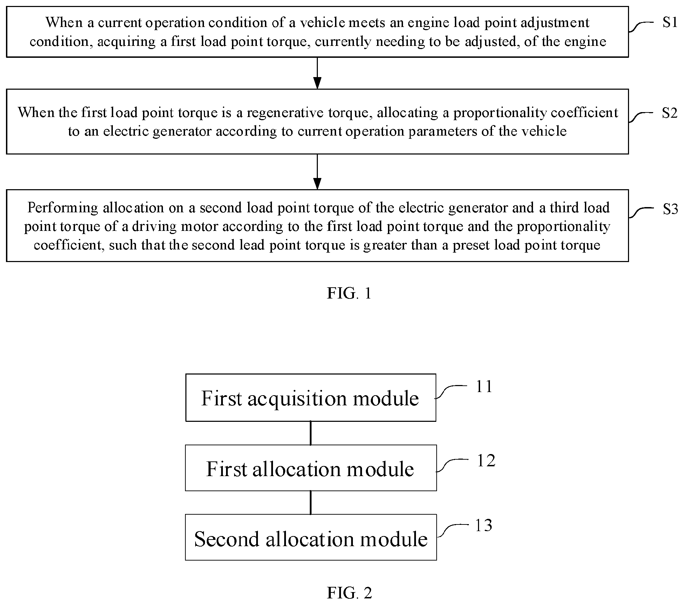

With reference to FIG. 1, a flow chart of a control method for engine load point allocation according to the present invention is shown. As shown in FIG. 1, the control method for the engine load point allocation according to the present invention is applied to a direct-drive operation mode of an engine, and the control method for the engine load point allocation includes:
step S1: when the current operation condition of a vehicle meets an engine load point adjustment condition, acquiring a first load point torque, currently needing to be adjusted, of the engine.

The first load point torque, currently needing to be adjusted, of the engine is an engine torque needing to be adjusted by means of an electric generator and a driving motor so as to ensure that the engine is in an optimal working point. Exemplarily: if a wheel end torque requested by a driver is 2000Nm, and a torque of the engine of which the current rotating speed is optimal is 2600Nm, the first load point torque is -600Nm, and thus, it is ensured that the engine is in the optimal working point.

Step S2: when the first load point torque is a regenerative torque, allocating a proportionality coefficient to an electric generator according to the current operation parameters of the vehicle.

The first load point torque is divided into a driving torque and a regenerative torque, "+" represents that the torque is the driving torque, "-" represents that the torque is the regenerative torque, and "+" and "-" only represent a state of the torque, but do not represent a size of the torque. Exemplarily, -600Nm represent that the regenerative torque is 600Nm, and -600Nm is greater than -10Nm.

Step S3: performing allocation on a second load point torque of the electric generator and a third load point torque of a driving motor according to the first load point torque and the proportionality coefficient, such that the second load point torque is greater than a preset load point torque.

The first load point torque is jointly borne by the electric generator and the driving motor, that is, the first load point torque is equal to the sum of the second load point torque and the third load point torque. When the first load point torque is the regenerative torque, the second load point torque is equal to a product of the first load point torque and the proportionality coefficient; and when the second load point torque is greater than the preset load point torque, an NVH demand of the vehicle is met, that is to say, when the second load point torque is greater than the preset load point torque, an NVH performance of the vehicle is guaranteed while it is ensured that the electric generator has a certain torque and does not idle.

According to the control method for the engine load point allocation provided by the present invention, when the current operation condition of the vehicle meets the engine load point adjustment condition, the first load point torque, currently needing to be adjusted, of the engine is acquired; when the first load point torque is the regenerative torque, the proportionality coefficient is allocated to the electric generator according to the current operation parameters of the vehicle, and the first load point torque originally borne only by the driving motor is allocated to be jointly borne by the electric generator and the driving motor; and the allocation is performed on the second load point torque of the electric generator and the third load point torque of the driving motor according to the first load point torque and the proportionality coefficient, such that it is ensured that the electric generator has a certain torque and does not idle, and the periodic gear knocking noise of the electric generator during idling is avoided. At the same time, the second load point torque is greater than the preset load point torque, such that the NVH performance of the vehicle is guaranteed while it is ensured that the electric generator has a certain torque, the user experience is improved, and the problem of poor user experience caused by the periodic gear knocking noise due to the electric generator idling in the direct-drive operation mode of the engine is solved.

In a feasible implementation, the current operation parameters of the vehicle at least include: a vehicle speed, a gearbox gear, an electric generator temperature and an accelerator pedal opening degree; when the first load point torque is the driving torque, the proportionality coefficient is zero, and the second load point torque is the preset load point torque; and when the first load point torque is the regenerative torque, the proportionality coefficient is allocated to the electric generator according to the current operation parameters of the vehicle, which includes the following steps:
step S21: determining an initial allocation proportionality coefficient of the electric generator according to the vehicle speed and the gearbox gear.

The proportionality coefficient is used for ensuring that the second load point torque is greater than the preset load point torque, and thus, the NVH performance of the vehicle is guaranteed while it is ensured that the electric generator has a certain torque and does not idle. The vehicle speed and the gearbox gear are two factors affecting the proportionality coefficient to the maximum extent, and therefore, the initial allocation proportionality coefficient of the electric generator is determined according to the vehicle speed and the gearbox gear.

Step S22: determining an initial allocation proportionality coefficient correction value of the electric generator is according to the electric generator temperature, the accelerator pedal opening degree and the vehicle speed.

The proportionality coefficient can also be affected by the electric generator temperature and the accelerator pedal opening degree, and therefore, the initial allocation proportionality coefficient correction value of the electric generator is determined according to the electric generator temperature, the accelerator pedal opening degree and the vehicle speed.

The initial allocation proportionality coefficient correction value includes an electric generator temperature correction value and an accelerator pedal opening degree correction value, the electric generator temperature correction value is determined according to the electric generator temperature, the accelerator pedal opening degree correction value is jointly determined according to the accelerator pedal opening degree and the vehicle speed, and the sum of the electric generator temperature correction value and the accelerator pedal opening degree correction value is the initial allocation proportionality coefficient correction value. Exemplarily: if the electric generator temperature correction value is 1%, and the accelerator pedal opening degree correction value is 2%, the initial allocation proportionality coefficient correction value is 3%.

Step S23: correcting the initial allocation proportionality coefficient according to the initial allocation proportionality coefficient correction value to obtain the proportionality coefficient.

The initial allocation proportionality coefficient is corrected according to the initial allocation proportionality coefficient correction value, by which the proportionality coefficient is precisely determined, it is ensured that the second load point torque is greater than the preset load point torque, and thus, the NVH performance of the vehicle is guaranteed while it is ensured that the electric generator has a certain torque and does not idle. Exemplarily: if the initial allocation proportionality coefficient is 5%, and the initial allocation proportionality coefficient correction value is 1%, the proportionality coefficient is 6%.

In a feasible implementation, the step that the first load point torque, currently needing to be adjusted, of the engine is acquired includes:
step S11: determining an optimal torque of the engine according to the current rotating speed of the engine and a required torque.

The required torque is a torque requested by the current driver, and the optimal torque of the engine is obtained by looking up a table according to the current rotating speed of the engine and required torque.

Step S12: determining the first load point torque, currently needing to be adjusted, of the engine according to the optimal torque of the engine and the required torque.

The first load point torque, currently needing to be adjusted, of the engine is obtained by subtracting the optimal torque of the engine by the required torque, and thus, it is ensured that the engine is at the optimal working point.

The current operation condition of the vehicle meets the engine load point adjustment condition, which includes that:
the vehicle is in a non-fuel cutoff operation condition,
an accelerator pedal opening degree of the vehicle is less than a first preset accelerator pedal opening degree,
an onboard diagnosis system of the vehicle is not activated, and
the third load point torque is less than a torque limiting value of the driving motor.

When the vehicle is in a fuel cutoff operation condition, the engine stops operating and has no torque, when the engine has no torque, the periodic gear knocking noise cannot be generated when the engine has no torque, and therefore, the engine load point adjustment condition is not met when the vehicle is in the fuel cutoff operation condition. A determination condition for the non-fuel cutoff operation condition includes a first non-fuel cutoff operation condition determination condition and a second non-fuel cutoff operation condition; firstly, determination is performed by adopting the first non-fuel cutoff operation condition determination condition, when the vehicle does not meet the first non-fuel cutoff operation condition determination condition, determination is performed by adopting the second non-fuel cutoff operation condition determination condition, a time period for performing determination by adopting the second non-fuel cutoff operation condition determination condition is the time when an accelerator is released every time, and a state value of the previous period is maintained before determination in the next period. Exemplarily: if it is determined as the non-fuel cutoff operation condition when the accelerator is released for the N^{th} time, a determination state of the non-fuel cutoff operation condition is maintained before the accelerator is released for the (N+1)^{th} time. The first non-fuel cutoff operation condition determination condition incudes that: when the accelerator pedal opening degree is greater than a second preset accelerator pedal opening degree, the required torque is greater than a preset required torque, and a charge level of a power battery is lower than first preset battery charge level, it is determined that the vehicle is in the non-fuel cutoff operation condition. The second non-fuel cutoff operation condition determination condition includes that: when battery charging power is limited or an engine regeneration enabling function is started, the vehicle is in the fuel cutoff operation condition; and when the atmospheric pressure is too low, or the charge level of the battery is lower than second preset battery charge level, the vehicle is in the non-fuel cutoff operation condition. The first preset battery power can be the same as or different from the second preset battery power, which is not limited herein.

The first preset accelerator pedal opening degree is used for representing the vehicle speed; if the accelerator pedal opening degree of the vehicle is less than the first preset accelerator pedal opening degree, it represents that the vehicle speed is lower and the vehicle is in a quiet driving operation condition under which the periodic gear knocking noise generated when the electric generator idles can lower the user experience. If the accelerator pedal opening degree of the vehicle is greater than or equal to the first preset accelerator pedal opening degree, it represents that the vehicle speed is higher and the vehicle is in an intense driving operation condition under which the noise of the engine is higher and the periodic gear knocking noise generated when the electric generator idles can be ignored and cannot affect a user, and therefore, the engine load point adjustment condition is not met. The first preset accelerator pedal opening degree is greater than the second preset accelerator pedal opening degree. Exemplarily: the first preset accelerator pedal opening degree is 70km/h, and the second preset accelerator pedal opening degree is 5km/h.

In one of feasible implementations, the vehicle is in an intelligent driving mode. Exemplarily: when the vehicle is automatically parked and cruise is activated, artificial operation of a driver is not needed, and therefore, the accelerator pedal opening degree is zero at this moment. Then, whether the vehicle is in the quiet driving operation condition or the intense driving operation condition is determined by looking up the table at this moment according to the required torque and the vehicle speed, if the vehicle is in the quiet driving operation condition, the engine load point adjustment condition is met, and if the vehicle is in the intense driving operation condition, the engine load point adjustment condition is not met.

If the onboard diagnosis system of the vehicle is not activated, it represents that the vehicle has no faults and can normally operate, and therefore, the engine load point adjustment condition is met.

If the third load point torque is less than the torque limiting value of the driving motor, the third load point torque is a torque that needs to be borne and allocated by the driving motor, and if the third load point torque is greater than the torque limiting value of the driving motor, the third load point torque is limited by the torque limiting value, and the NVH demand of the vehicle cannot be met.

In one of feasible implementations, after performing allocation on the second load point torque of the electric generator and the third load point torque of the driving motor according to the first load point torque and the proportionality coefficient, the second load point torque is less than or equal to the preset load point torque, and the method further includes:
step S4: reducing the third load point torque to ensure that the second load point torque is greater than the preset load point torque.

When the second load point torque is less than or equal to the preset load point torque, the NVH performance of the vehicle cannot be met. Therefore, whether the second load point torque is greater than the preset load point torque is verified again, such that it is ensured that the NVH performance of the vehicle is met. Exemplarily: if the first load point torque is -600Nm, the preset load point torque is -10Nm, the second load point torque is -6Nm, and the third load point torque is -594Nm, at this moment, the second load point torque is less than the preset load point torque, the third load point torque is reduced to -589Nm, and the second load point torque is reduced to -11Nm, such that it is ensured that the second load point torque is greater than the preset load point torque, and the NVH performance of the vehicle is met.

Based on the same concept as the above method, the present invention may be implemented in a control apparatus for engine load point allocation which is used for performing the control method for the engine load point allocation provided in the above method of the present invention and is for a direct-drive operation mode of an engine. With reference to FIG. 2, a block diagram of a control apparatus for engine load point allocation is shown. As shown in FIG. 2, the control apparatus for the engine load point allocation includes:
a first acquisition module 11 configured to, when the current operation condition of a vehicle meets an engine load point adjustment condition, acquire a first load point torque, currently needing to be adjusted, of the engine;
a first allocation module 12 configured to, when the first load point torque is a regenerative torque, allocate a proportionality coefficient to an electric generator according to the current operation parameters of the vehicle; and
a second allocation module 13 configured to perform allocation on a second load point torque of the electric generator and a third load point torque of a driving motor according to the first load point torque and the proportionality coefficient, such that the second load point torque is greater than a preset load point torque.

When the current operation condition of the vehicle meets the engine load point adjustment condition, the first load point torque, currently needing to be adjusted, of the engine is acquired; when the first load point torque is the regenerative torque, the proportionality coefficient is allocated to the electric generator according to the current operation parameters of a vehicle, and the first load point torque originally borne only by the driving motor is allocated to be jointly borne by the electric generator and the driving motor; and the allocation is performed on the second load point torque of the electric generator and the third load point torque of the driving motor according to the first load point torque and the proportionality coefficient, such that it is ensured that the electric generator has a certain torque and does not idle, and the periodic gear knocking noise of the electric generator during idling is avoided. At the same time, the second load point torque is greater than the preset load point torque, such that the NVH performance of the vehicle is guaranteed while it is ensured that the electric generator has a certain torque, the user experience is improved, and the problem of poor user experience caused by the periodic gear knocking noise due to the electric generator idling in a direct-drive operation mode of the engine is solved.

In a feasible implementation, the current operation parameters of the vehicle at least include: a vehicle speed, a gearbox gear, an electric generator temperature and an accelerator pedal opening degree; and the first allocation module 12 includes:
a first determination unit 121 configured to determine an initial allocation proportionality coefficient of the electric generator according to the vehicle speed and the gearbox gear;
a second determination unit 122 configured to determine an initial allocation proportionality coefficient correction value of the electric generator according to the electric generator temperature, the accelerator pedal opening degree and the vehicle speed; and
a first acquisition unit 123 configured to correct the initial allocation proportionality coefficient according to the initial allocation proportionality coefficient correction value to obtain the proportionality coefficient.

The first acquisition module 11 includes:
a third determination unit 111 configured to determine an optimal torque of the engine according to the current rotating speed of the engine and a required torque; and
a fourth determination unit 112 configured to determine the first load point torque, currently needing to be adjusted, of the engine according to the optimal torque of the engine and the required torque.

The current operation condition of the vehicle meets the engine load point adjustment condition, which includes:
the vehicle is in a non-fuel cutoff operation condition,
the accelerator pedal opening degree of the vehicle is less than a first preset accelerator pedal opening degree,
an onboard diagnosis system of the vehicle is not activated, and
the third load point torque is less than a torque limiting value of the driving motor.

In another feasible implementation, after performing allocation on the second load point torque of the electric generator and the third load point torque of the driving motor according to the first load point torque and the proportionality coefficient, the second load point torque is less than or equal to the preset load point torque, and the control apparatus for the engine load point allocation further includes:
a first control module 14 configured to reduce the third load point torque to ensure that the second load point torque is greater than the preset load point torque.

As the apparatus , it is basically similar to the method so that the apparatus is described relatively simply, and reference can be made to the description of the method for relevant parts.

The method and the apparatus in the present description are described in a progressive way, the same or similar parts among the method and the apparatus can refer to each other, and the emphasis in each of the method and the apparatus will focus on differences from other.

The present invention further provides a readable storage medium, wherein the readable storage medium has a control program for engine load point allocation stored thereon, and when the control program for the engine load point allocation is executed by a processor, the processor is caused to carry out the control method for the engine load point allocation provided in the first aspect of the present invention.

According to the readable storage medium provided by the present invention, when the current operation condition of the vehicle meets the engine load point adjustment condition, the first load point torque, currently needing to be adjusted, of the engine is acquired; when the first load point torque is the regenerative torque, the proportionality coefficient is allocated to the electric generator according to the current operation parameters of the vehicle, and the first load point torque originally borne only by the driving motor is allocated to be co-borne by the electric generator and the driving motor; and allocation is performed on the second load point torque of the electric generator and the third load point torque of the driving motor according to the first load point torque and the proportionality coefficient, such that it is ensured that the electric generator has a certain torque and does not idle, and periodic gear knocking noise of the electric generator during idling is avoided. At the same time, the second load point torque is greater than the preset load point torque, such that the NVH performance of the vehicle is guaranteed while it is ensured that the electric generator has a certain torque, the user experience is improved, and the problem of poor user experience caused by the periodic gear knocking noise due to the electric generator idling in a direct-drive operation mode of the engine is solved.

The present invention further provides a vehicle, including a controller, wherein the controller includes a readable storage medium and a processor;
the readable storage medium has a control program for engine load point allocation stored thereon; and
the processor when executing the control program for the engine load point allocation in the readable storage medium is caused to carry out the control method for the engine load point allocation provided in the first aspect of the present disclosure.

According to the vehicle provided by the present invention, when the current operation condition of the vehicle meets an engine load point adjustment condition, a first load point torque, currently needing to be adjusted, of an engine is acquired; when the first load point torque is a regenerative torque, a proportionality coefficient is allocated to an electric generator according to the current operation parameters of the vehicle, and the first load point torque originally borne only by a driving motor is allocated to be co-borne by the electric generator and the driving motor; and allocation is performed on a second load point torque of the electric generator and a third load point torque of the driving motor according to the first load point torque and the proportionality coefficient, such that it is ensured that the electric generator has a certain torque and does not idle, and periodic gear knocking noise of the electric generator during idling is avoided. At the same time, the second load point torque is greater than a preset load point torque, such that an NVH performance of the vehicle is guaranteed while it is ensured that the electric generator has a certain torque, the user experience is improved, and the problem of poor user experience caused by the periodic gear knocking noise due to the electric generator idling in a direct-drive operation mode of the engine is solved.

The apparatus described as above is only schematic, wherein the units described as separated components can be or not be physically separated, and components displayed as units can be or not be physical units, that is, they can be located on the same place or distributed on a plurality of network units. Parts or all of the modules can be selected according to an actual demand to achieve the purpose of the solution.

The present invention can be implemented by hardware or a software module running on one or more processors or a combination thereof. It should be understood by the skilled in the art that some or parts of functions of some or all components in the computing and processing device according to the present invention can be implemented in practice by using a microprocessor or a digital signal processor (DSP). The present invention can also be implemented as a part or all of device or apparatus programs (such as a computer program and a computer program product) for performing the method described herein. Such a program for implementing the present invention can be stored in a computer-readable medium or can have one or more signal forms. Such a signal can be downloaded from an Internet website or provided on a carrier signal or any other forms.

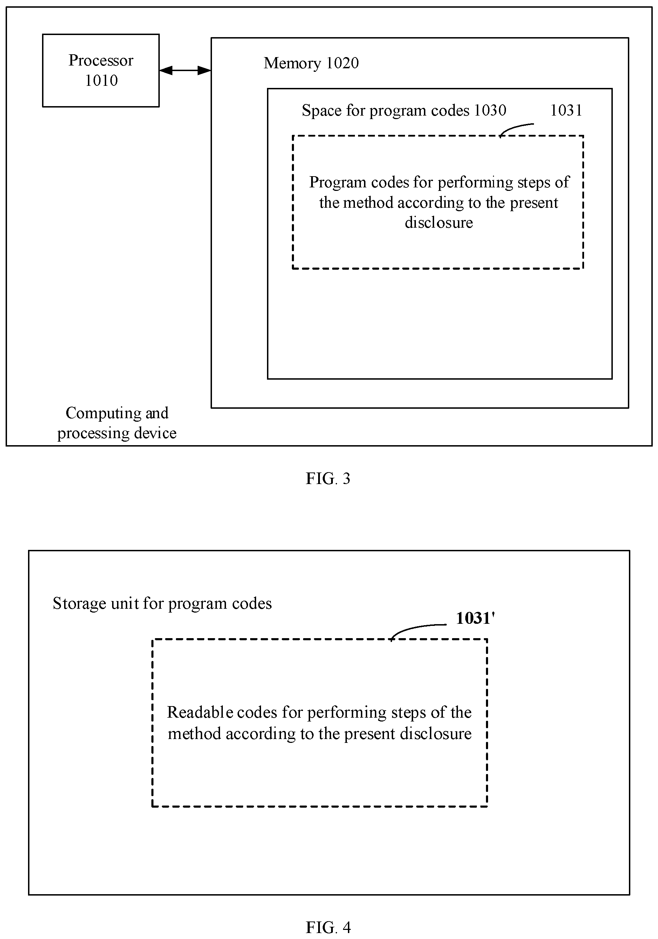

For example, FIG. 3 shows a computing and processing device capable of implementing the method according to the present invention. The computing and processing device traditionally includes a processor 1010 and a computer program product or a computer-readable medium in a form of a memory 1020. The memory 1020 can be an electronic memory such as a flash memory, an Electrically Erasable Programmable Read-Only Memory (EEPROM), an Erasable Programmable Read-Only Memory ((EPROM), a hard disk or a Read-Only Memory (ROM). The memory 1020 is provided with a storage space 1030 for program codes 1031 for performing any method step in the above-mentioned method. For example, the storage space 1030 for the program codes can include the various program codes 1031 respectively used for implementing the various steps in the above method. These program codes can be read from or written into one or more computer program products. These computer program products include program code carriers such as a hard disk, a Compact Disc (DC), a storage card or a floppy disk. Such a computer program product is usually a portable or fixed storage unit with reference to FIG. 4. The storage unit can be provided with a storage segment, a storage space, etc. having similar layout as the memory 1020 in the computing and processing device in FIG. 3. The program codes can be, for example, compressed in an appropriate form. Usually, the storage unit includes computer-readable codes 1031', i.e., codes that can be read by a processor such as the processor 1010, and these codes, when run by the computing and processing device, make the computing and processing device perform each step in the method described as above.

In the description provided herein lots of specific details have been described. However, it can be understood that the present invention is defined in the appended claims only and can be put into practice without these specific details.

## Claims

1. A control method for engine load point allocation in a hybrid vehicle comprising an engine, an electric generator hard connected to the engine, a high voltage battery, and a driving motor, the method being applied to a direct-drive operation mode of the engine, in which the engine directly drives the vehicle and does not drive the electric generator to charge the high-voltage battery so that the electric generator has no torque, whereby due to the existence of a gear gap between the engine and the electric generator, the electric generator generates periodic gear knocking noise during idling, wherein the control method comprises:
(S1) when a current operation condition of the vehicle meets an engine load point adjustment condition, acquiring a first load point torque, currently needed to be adjusted, of the engine by:
(S11) determining an optimal torque of the engine according to a current rotating speed of the engine and a required torque; and
(S12) determining the first load point torque, currently needed to be adjusted, of the engine according to the optimal torque of the engine and the required torque;
(S2) when the first load point torque is a regenerative torque, allocating a proportionality coefficient to the electric generator according to current operation parameters of the vehicle, wherein the second load point torque equals a product of the first load point torque and the proportionality coefficient; and
(S3) performing allocation on a second load point torque of the electric generator and a third load point torque of a driving motor according to the first load point torque and the proportionality coefficient, such that the second load point torque is greater than a preset load point torque,
wherein the first load point torque is an engine torque to be adjusted to maintain the engine at an optimal working point and is equal to a sum of the second load point torque of the electric generator and the third load point torque of the driving motor, and
wherein the current operation condition of the vehicle meeting the engine load point adjustment condition comprises that:
the vehicle is in a non-fuel cutoff operation condition;
an accelerator pedal opening degree of the vehicle is less than a first preset accelerator pedal opening degree;
an onboard diagnosis system of the vehicle is not activated; and
the third load point torque is less than a torque limiting value of the driving motor.

2. The control method according to claim 1, wherein the current operation parameters of the vehicle at least comprise: a vehicle speed, a gearbox gear, an electric generator temperature and an accelerator pedal opening degree; and the when the first load point torque is the regenerative torque, allocating the proportionality coefficient to the electric generator according to the current operation parameters of the vehicle comprises:
(S21) determining an initial allocation proportionality coefficient of the electric generator according to the vehicle speed and the gearbox gear;
(S22) determining an initial allocation proportionality coefficient correction value of the electric generator according to the electric generator temperature, the accelerator pedal opening degree and the vehicle speed; and
(S23) correcting the initial allocation proportionality coefficient according to the initial allocation proportionality coefficient correction value, to obtain the proportionality coefficient.

3. The control method according to claim 1, wherein after performing allocation on the second load point torque of the electric generator and the third load point torque of the driving motor according to the first load point torque and the proportionality coefficient, the second load point torque is less than or equal to the preset load point torque, and the control method further comprises:
reducing the third load point torque to ensure that the second load point torque is greater than the preset load point torque.

4. The control method according to claim 1, wherein the initial allocation proportionality coefficient correction value comprises an electric generator temperature correction value and an accelerator pedal opening degree correction value;
wherein the electric generator temperature correction value is determined according to the electric generator temperature, and the accelerator pedal opening degree correction value is determined jointly by the accelerator pedal opening degree and the vehicle speed.

5. The control method according to claim 1, wherein a determination condition for the non-fuel cutoff operation condition comprises a first non-fuel cutoff operation condition determination condition and a second non-fuel cutoff operation condition; and
a determination method for the non-fuel cutoff operation condition comprises:
performing determination by adopting the first non-fuel cutoff operation condition determination condition; and
when the vehicle does not meet the first non-fuel cutoff operation condition determination condition, performing determination by adopting the second non-fuel cutoff operation condition determination condition.

6. The control method according to claim 5, wherein the first non-fuel cutoff operation condition determination condition comprises that: the accelerator pedal opening degree is greater than a second preset accelerator pedal opening degree, a required torque is greater than a preset required torque, and a charge level of a power battery is lower than a first preset battery charge level; and
the second non-fuel cutoff operation condition determination condition comprises that: an atmospheric pressure is too low, or a battery charge level is lower than a second preset battery charge level.

7. A readable storage medium, wherein the readable storage medium has a control program for the engine load point allocation stored thereon, and the control program for the engine load point allocation, when executed by a processor, causes the processor to carry out the control method for the engine load point allocation according to any one of claims 1 to 6.

8. A vehicle, comprising a controller, the controller comprising a readable storage medium and a processor, wherein the readable storage medium has a control program for engine load point allocation stored thereon; and
the processor when executing the control program for the engine load point allocation in the readable storage medium is caused to carry out the control method for the engine load point allocation according to any one of claims 1 to 6.

9. A computer program product, comprising computer-readable codes, wherein when the computer-readable codes are executed by a computing and processing device, the computing and processing device is caused to carry out the control method for the engine load point allocation according to any one of claims 1 to 6.

## Patentansprüche

1. Steuerungsverfahren zur Verbrennungsmotor-Lastpunkt-Zuweisung in einem Hybridfahrzeug, das einen Verbrennungsmotor, einen mit dem Verbrennungsmotor fest verbundenen elektrischen Generator, eine Hochvoltbatterie und einen Antriebsmotor aufweist, wobei das Verfahren auf einen Direktantrieb-Betriebsmodus des Verbrennungsmotors angewendet wird, in dem der Verbrennungsmotor das Fahrzeug direkt antreibt und den elektrischen Generator nicht antreibt, um die Hochvoltbatterie zu laden, sodass der elektrische Generator kein Drehmoment aufweist, wodurch aufgrund des Vorhandenseins eines Getriebespiels zwischen dem Verbrennungsmotor und dem elektrischen Generator der elektrische Generator während des Leerlaufs ein periodisches Getriebeklappergeräusch erzeugt, wobei das Steuerungsverfahren aufweist:
(S1) wenn ein aktueller Betriebszustand des Fahrzeugs eine Verbrennungsmotor-Lastpunkt-Anpassungsbedingung erfüllt, Erfassen eines aktuell anzupassenden ersten Lastpunkt-Drehmoments des Verbrennungsmotors durch:
(S11) Bestimmen eines optimalen Drehmoments des Verbrennungsmotors gemäß einer aktuellen Drehzahl des Verbrennungsmotors und einem angeforderten Drehmoment; und
(S12) Bestimmen des aktuell anzupassenden ersten Lastpunkt-Drehmoments des Verbrennungsmotors gemäß dem optimalen Drehmoment des Verbrennungsmotors und dem angeforderten Drehmoment;
(S2) wenn das erste Lastpunkt-Drehmoment ein regeneratives Drehmoment ist, Zuweisen eines Proportionalitätskoeffizienten zu dem elektrischen Generator gemäß aktuellen Betriebsparametern des Fahrzeugs, wobei das zweite Lastpunkt-Drehmoment einem Produkt aus dem ersten Lastpunkt-Drehmoment und dem Proportionalitätskoeffizienten entspricht; und
(S3) Durchführen einer Zuweisung eines zweiten Lastpunkt-Drehmoments des elektrischen Generators und eines dritten Lastpunkt-Drehmoments eines Antriebsmotors gemäß dem ersten Lastpunkt-Drehmoment und dem Proportionalitätskoeffizienten, sodass das zweite Lastpunkt-Drehmoment größer als ein voreingestelltes Lastpunkt-Drehmoment ist,
wobei das erste Lastpunkt-Drehmoment ein anzupassendes Drehmoment des Verbrennungsmotors ist, um den Verbrennungsmotor an einem optimalen Arbeitspunkt zu halten, und gleich einer Summe aus dem zweiten Lastpunkt-Drehmoment des elektrischen Generators und dem dritten Lastpunkt-Drehmoment des Antriebsmotors ist, und
wobei das Erfüllen der Verbrennungsmotor-Lastpunkt-Anpassungsbedingung durch den aktuellen Betriebszustand des Fahrzeugs aufweist, dass:
das Fahrzeug in einem Nicht-Schubabschaltung-Betriebszustand ist;
ein Fahrpedalöffnungsgrad des Fahrzeugs kleiner als ein erster voreingestellter Fahrpedalöffnungsgrad ist;
ein Onboard-Diagnosesystem des Fahrzeugs nicht aktiviert ist; und
das dritte Lastpunkt-Drehmoment kleiner als ein Drehmomentbegrenzungswert des Antriebsmotors ist.

2. Steuerungsverfahren nach Anspruch 1, wobei die aktuellen Betriebsparameter des Fahrzeugs zumindest aufweisen: eine Fahrzeuggeschwindigkeit, einen Getriebegang, eine Temperatur des elektrischen Generators und einen Fahrpedalöffnungsgrad; und wobei, wenn das erste Lastpunkt-Drehmoment das regenerative Drehmoment ist, das Zuweisen des Proportionalitätskoeffizienten zu dem elektrischen Generator gemäß den aktuellen Betriebsparametern des Fahrzeugs aufweist:
(S21) Bestimmen eines initialen Zuweisungsproportionalitätskoeffizienten des elektrischen Generators gemäß der Fahrzeuggeschwindigkeit und dem Getriebegang;
(S22) Bestimmen eines Korrekturwerts des initialen Zuweisungsproportionalitätskoeffizienten des elektrischen Generators gemäß der Temperatur des elektrischen Generators, dem Fahrpedalöffnungsgrad und der Fahrzeuggeschwindigkeit; und
(S23) Korrigieren des initialen Zuweisungsproportionalitätskoeffizienten gemäß dem Korrekturwert des initialen Zuweisungsproportionalitätskoeffizienten, um den Proportionalitätskoeffizienten zu erhalten.

3. Steuerungsverfahren nach Anspruch 1, wobei nach Durchführen einer Zuweisung des zweiten Lastpunkt-Drehmoments des elektrischen Generators und des dritten Lastpunkt-Drehmoments des Antriebsmotors gemäß dem ersten Lastpunkt-Drehmoment und dem Proportionalitätskoeffizienten das zweite Lastpunkt-Drehmoment kleiner oder gleich dem voreingestellten Lastpunkt-Drehmoment ist, und das Steuerungsverfahren ferner aufweist:
Reduzieren des dritten Lastpunkt-Drehmoments, um sicherzustellen, dass das zweite Lastpunkt-Drehmoment größer als das voreingestellte Lastpunkt-Drehmoment ist.

4. Steuerungsverfahren nach Anspruch 1, wobei der Korrekturwert des initialen Zuweisungsproportionalitätskoeffizienten einen Korrekturwert der Temperatur des elektrischen Generators und einen Korrekturwert des Fahrpedalöffnungsgrades aufweist;
wobei der Korrekturwert der Temperatur des elektrischen Generators gemäß der Temperatur des elektrischen Generators bestimmt wird, und der Korrekturwert des Fahrpedalöffnungsgrades gemeinsam durch den Fahrpedalöffnungsgrad und die Fahrzeuggeschwindigkeit bestimmt wird.

5. Steuerungsverfahren nach Anspruch 1, wobei eine Bestimmungsbedingung für den Nicht-Schubabschaltung-Betriebszustand eine erste Nicht-Schubabschaltungs-Betriebszustand-Bestimmungsbedingung und einen zweiten Nicht-Schubabschaltung-Betriebszustand-Bestimmungsbedingung aufweist; und
ein Bestimmungsverfahren für den Nicht-Schubabschaltung-Betriebszustand aufweist:
Durchführen einer Bestimmung unter Verwendung der ersten Nicht-Schubabschaltung-Betriebszustand-Bestimmungsbedingung; und
wenn das Fahrzeug die erste Nicht-Schubabschaltung-Betriebszustand-Bestimmungsbedingung nicht erfüllt, Durchführen einer Bestimmung unter Verwendung der zweiten Nicht-Schubabschaltung-Betriebszustand-Bestimmungsbedingung.

6. Steuerungsverfahren nach Anspruch 5, wobei die erste Nicht-Schubabschaltung-Betriebszustand-Bestimmungsbedingung aufweist, dass: der Fahrpedalöffnungsgrad größer als ein zweiter voreingestellter Fahrpedalöffnungsgrad ist, ein angefordertes Drehmoment größer als ein voreingestelltes angefordertes Drehmoment ist, und ein Ladezustand einer Leistungsbatterie niedriger als ein erster voreingestellter Batterieladezustand ist; und
die zweite Nicht-Schubabschaltung-Betriebszustand-Bestimmungsbedingung aufweist, dass: ein Atmosphärendruck zu niedrig ist, oder ein Batterieladezustand niedriger als ein zweiter voreingestellter Batterieladezustand ist.

7. Lesbares Speichermedium, wobei das lesbare Speichermedium ein darauf gespeichertes Steuerprogramm für die Verbrennungsmotor-Lastpunkt-Zuweisung aufweist, und das Steuerprogramm für die Verbrennungsmotor-Lastpunkt-Zuweisung bei Ausführung durch einen Prozessor den Prozessor veranlasst, das Steuerungsverfahren für die Verbrennungsmotor-Lastpunkt-Zuweisung nach einem der Ansprüche 1 bis 6 auszuführen.

8. Fahrzeug, mit einer Steuerung, wobei die Steuerung ein lesbares Speichermedium und einen Prozessor aufweist, wobei das lesbare Speichermedium ein darauf gespeichertes Steuerprogramm für die Verbrennungsmotor-Lastpunktzuweisung aufweist; und
wobei der Prozessor bei Ausführung des Steuerprogramms für die Verbrennungsmotor-Lastpunkt-Zuweisung in dem lesbaren Speichermedium dazu veranlasst wird, das Steuerungsverfahren für die Verbrennungsmotor-Lastpunktzuweisung nach einem der Ansprüche 1 bis 6 auszuführen.

9. Computerprogrammprodukt, mit computerlesbaren Codes, wobei, wenn die computerlesbaren Codes durch eine Rechen- und Verarbeitungsvorrichtung ausgeführt werden, die Rechen- und Verarbeitungsvorrichtung veranlasst wird, das Steuerungsverfahren für die Verbrennungsmotor-Lastpunkt-Zuweisung nach einem der Ansprüche 1 bis 6 auszuführen.

## Revendications

1. Procédé de commande pour une allocation de points de charge de moteur thermique dans un véhicule hybride qui comprend un moteur thermique, un générateur électrique qui est branché sur le moteur thermique, une batterie haute tension et un moteur d'entraînement, le procédé étant appliqué à un mode de fonctionnement à entraînement direct du moteur thermique dans lequel le moteur thermique entraîne directement le véhicule et n'entraîne pas le générateur électrique pour charger la batterie haute tension de telle sorte que le générateur électrique ne présente pas de couple, d'où il résulte que du fait de l'existence d'un espace d'engrenage entre le moteur thermique et le générateur électrique, le générateur électrique génère un bruit de cliquetis d'engrenage périodique au ralenti, dans lequel le procédé de commande comprend :
(S1) lorsqu'une condition de fonctionnement courant du véhicule satisfait une condition de réglage de point de charge de moteur thermique, l'acquisition d'un premier couple de point de charge, dont le réglage est présentement nécessaire, du moteur thermique en :
(S11) déterminant un couple optimum du moteur thermique en fonction d'une vitesse de rotation courante du moteur thermique et d'un couple requis ; et en
(S12) déterminant le premier couple de point de charge, dont le réglage est présentement nécessaire, du moteur thermique en fonction du couple optimum du moteur thermique et du couple requis ;
(S2) lorsque le premier couple de point de charge est un couple régénératif, l'allocation d'un coefficient de proportionnalité au générateur électrique en fonction de paramètres de fonctionnement courant du véhicule, dans lequel le deuxième couple de point de charge est égal à un produit du premier couple de point de charge et du coefficient de proportionnalité ; et
(S3) la réalisation d'une allocation sur un deuxième couple de point de charge du générateur électrique et sur un troisième couple de point de charge d'un moteur d'entraînement en fonction du premier couple de point de charge et du coefficient de proportionnalité, de telle sorte que le deuxième couple de point de charge soit supérieur à un couple de point de charge prédéfini,
dans lequel le premier couple de point de charge est un couple de moteur thermique qui doit être réglé afin de maintenir le moteur thermique à un point de fonctionnement optimum et est égal à une somme du deuxième couple de point de charge du générateur électrique et du troisième couple de point de charge du moteur d'entraînement, et
dans lequel la condition de fonctionnement courant du véhicule qui satisfait la condition de réglage de point de charge de moteur thermique comprend le fait que :
le véhicule est dans une condition de fonctionnement sans coupure de carburant ;
un degré d'ouverture de pédale d'accélérateur du véhicule est inférieur à un premier degré d'ouverture de pédale d'accélérateur prédéfini ;
un système de diagnostic embarqué du véhicule n'est pas activé ; et
le troisième couple de point de charge est inférieur à une valeur de limitation de couple du moteur d'entraînement.

2. Procédé de commande selon la revendication 1, dans lequel les paramètres de fonctionnement courant du véhicule comprennent au moins : une vitesse de véhicule, un pignon de boîte de vitesses, une température de générateur électrique et un degré d'ouverture de pédale d'accélérateur ; et lorsque le premier couple de point de charge est le couple régénératif, l'allocation du coefficient de proportionnalité au générateur électrique en fonction des paramètres de fonctionnement courant du véhicule comprend :
(S21) la détermination d'un coefficient de proportionnalité d'allocation initiale du générateur électrique en fonction de la vitesse de véhicule et du pignon de boîte de vitesses ;
(S22) la détermination d'une valeur de correction de coefficient de proportionnalité d'allocation initiale du générateur électrique en fonction de la température de générateur électrique, du degré d'ouverture de pédale d'accélérateur et de la vitesse de véhicule ; et
(S23) la correction du coefficient de proportionnalité d'allocation initiale en fonction de la valeur de correction de coefficient de proportionnalité d'allocation initiale afin d'obtenir le coefficient de proportionnalité.

3. Procédé de commande selon la revendication 1, dans lequel, après la réalisation d'une allocation sur le deuxième couple de point de charge du générateur électrique et sur le troisième couple de point de charge du moteur d'entraînement en fonction du premier couple de point de charge et du coefficient de proportionnalité, le deuxième couple de point de charge est inférieur ou égal au couple de point de charge prédéfini, et le procédé de commande comprend en outre :
la réduction du troisième couple de point de charge afin d'assurer que le deuxième couple de point de charge est supérieur au couple de point de charge prédéfini.

4. Procédé de commande selon la revendication 1, dans lequel :
la valeur de correction de coefficient de proportionnalité d'allocation initiale comprend une valeur de correction de température de générateur électrique et une valeur de correction de degré d'ouverture de pédale d'accélérateur ; et dans lequel :
la valeur de correction de température de générateur électrique est déterminée en fonction de la température de générateur électrique, et la valeur de correction de degré d'ouverture de pédale d'accélérateur est déterminée de façon conjointe au moyen du degré d'ouverture de pédale d'accélérateur et de la vitesse de véhicule.

5. Procédé de commande selon la revendication 1, dans lequel :
une condition de détermination pour la condition de fonctionnement sans coupure de carburant comprend une première condition de détermination de condition de fonctionnement sans coupure de carburant et une seconde condition de détermination de condition de fonctionnement sans coupure de carburant ; et
un procédé de détermination pour la condition de fonctionnement sans coupure de carburant comprend :
la réalisation d'une détermination en adoptant la première condition de détermination de condition de fonctionnement sans coupure de carburant ; et
lorsque le véhicule ne satisfait pas la première condition de détermination de condition de fonctionnement sans coupure de carburant, la réalisation d'une détermination en adoptant la seconde condition de détermination de condition de fonctionnement sans coupure de carburant.

6. Procédé de commande selon la revendication 5, dans lequel :
la première condition de détermination de condition de fonctionnement sans coupure de carburant comprend le fait que : le degré d'ouverture de pédale d'accélérateur est supérieur à un second degré d'ouverture de pédale d'accélérateur prédéfini, un couple requis est supérieur à un couple requis prédéfini et un niveau de charge d'une batterie d'alimentation électrique est inférieur à un premier niveau de charge de batterie prédéfini ; et
la seconde condition de détermination de condition de fonctionnement sans coupure de carburant comprend le fait que : une pression atmosphérique est trop faible, ou un niveau de charge de batterie est inférieur à un second niveau de charge de batterie prédéfini.

7. Support de stockage lisible, dans lequel le support de stockage lisible comporte, stocké en son sein, un programme de commande pour l'allocation de points de charge de moteur thermique, et le programme de commande pour l'allocation de points de charge de moteur thermique, lorsqu'il est exécuté par un processeur, force le processeur à mettre en œuvre le procédé de commande pour l'allocation de points de charge de moteur thermique selon l'une quelconque des revendications 1 à 6.

8. Véhicule, comprenant un contrôleur, le contrôleur comprenant un support de stockage lisible et un processeur, dans lequel :
le support de stockage lisible comporte, stocké en son sein, un programme de commande pour l'allocation de points de charge de moteur thermique ; et
le processeur, lorsqu'il exécute le programme de commande pour l'allocation de points de charge de moteur thermique stocké dans le support de stockage lisible, est forcé de mettre en œuvre le procédé de commande pour l'allocation de points de charge de moteur thermique selon l'une quelconque des revendications 1 à 6.

9. Produit de programme informatique comprenant des codes lisibles par ordinateur, dans lequel, lorsque les codes lisibles par ordinateur sont exécutés par un dispositif informatique et de traitement, le dispositif informatique et de traitement est forcé de mettre en œuvre le procédé de commande pour l'allocation de points de charge de moteur thermique selon l'une quelconque des revendications 1 à 6.
